# EUROPEAN PATENT APPLICATION

(11) **EP 4 273 831 A1**
(43) Date of publication of application: **08.11.2023**
(21) Application number: 23165913.7
(22) Date of filing: 31.03.2023
(51) Int. Cl.: G08G 1/01, G08G 1/0967, G08G 1/16

(54) **MAP RELATED INFORMATION SHARING FOR AUTONOMOUS VEHICLES**

(30) Priority: 04.05.2022 US 202263364189 P
(71) Applicant: Tusimple, Inc., San Diego, CA 92122 (US)
(72) Inventor: WU, Hao, San Diego, 94010 (US); ZHU, Jing, Los Altos, 94022 (US); HUNG, Wan-Ting, Dublin, 94568 (US); JIANG, Minhao, San Diego, 92122 (US); XU, Ke, San Diego, 92122 (US); JIANG, Siyu, San Diego, 92122 (US); ROSSI JR., Robert, San Diego, 92122 (US)
(74) Representative: Black, Diego

(57) **Abstract**

A method of sharing information about an object or a condition on a road includes receiving, by a server from a first autonomous vehicle, a message comprising a first data structure that includes information about a driving condition on a road; and transmitting, by the server to a second autonomous vehicle, a second data structure that includes information about the driving condition on the road, where the second data structure is transmitted in response to determining that a location of the driving condition is related to a trajectory on which the second autonomous vehicle is operating or is expected to drive, where the second data structure is transmitted to the second autonomous vehicle before the second autonomous vehicle reaches the location of the driving condition, and where the server is located in a fixed location outside of the first autonomous vehicle and the second autonomous vehicle.

## Description

### TECHNICAL FIELD

This document relates to systems, apparatus, and methods for updating and sharing information related to a map for autonomous vehicles.

### BACKGROUND

Autonomous vehicle navigation is a technology that can allow a vehicle to sense the position and movement of vehicles around an autonomous vehicle and, based on the sensing, control the autonomous vehicle to safely navigate towards a destination. An autonomous vehicle may operate in several modes. In some cases, an autonomous vehicle may allow a driver to operate the autonomous vehicle as a conventional vehicle by controlling the steering, throttle, clutch, gear shifter, and/or other devices. In other cases, a driver may engage the autonomous driving mode to allow the vehicle to drive itself.

### SUMMARY

Connected autonomous vehicle technology can enable real-time sharing and utilization of information about road objects (e.g., emergency vehicles), road conditions, and/or environmental conditions between autonomous vehicles to enable an autonomous vehicle with such information to perform optimal autonomous driving related operations.

A method of sharing driving related information with an autonomous vehicle, comprising receiving, by a server from a first autonomous vehicle, a message comprising a first data structure that includes information about a driving condition on a road; and transmitting, by the server to a second autonomous vehicle, a second data structure that includes information about the driving condition on the road, where the second data structure is transmitted in response to a determination that a location of the driving condition is related to a trajectory on which the second autonomous vehicle is operating or is expected to drive, where the second data structure is transmitted to the second autonomous vehicle before the second autonomous vehicle reaches the location of the driving condition, and where the server is located in a fixed location outside of the first autonomous vehicle and the second autonomous vehicle.

In some embodiments, the second data structure includes a recommended driving operation, and the instructions to the one or more devices in the second autonomous vehicle are in accordance with the recommended driving operation. In some embodiments, recommended driving operation indicates a recommendation to steer from a center of a lane on which the second autonomous vehicle is operating to one side of the lane. In some embodiments, the recommended driving operation indicates to the second autonomous vehicle to steer from a lane on which the second autonomous vehicle is operating to another lane that is adjacent to the lane. In some embodiments, the data structure includes a type of the driving condition, a location of the driving condition, a confidence value that indicates a level of confidence that the driving condition is associated with the type, a timestamp when the driving condition is detected, and/or a unique identifier related to the driving condition.

In some embodiments, the data structure includes sensor data obtained by a sensor on the first autonomous vehicle, a hypothesis about the driving condition, a location of the driving condition, a timestamp when the driving condition is detected, and/or a unique identifier related to the driving condition. In some embodiments, the method further includes determining one or more characteristics of the driving condition based on analysis of the sensor data; and updating the data structure to include the one or more characteristics, where the second data structure transmitted to the second autonomous vehicle includes the one or more characteristic. In some embodiments, the method further includes displaying the sensor data on a monitor; receiving indication of one or more characteristics of the driving condition via a graphical user interface (GUI) from the monitor; and updating the data structure to include the one or more characteristics, where the second data structure transmitted to the second autonomous vehicle includes the one or more characteristic.

In some embodiments, the second autonomous vehicle includes a computer that includes a processor configured to: receive the second data structure; perform a determination that the second autonomous vehicle is at or within a first predetermined distance of the location of the driving condition; and send, in response to the determination, instructions to one or more devices in the second autonomous vehicle, where the instructions cause the second autonomous vehicle to perform a driving related operation responsive to the location of the driving condition. In some embodiments, the processor of the second autonomous vehicle is configured to delete the data structure in response to a determination that the data structure is associated with a timestamp that is more than or outside of a predetermined time window from a time when the second autonomous vehicle is expected to drive along the trajectory or when the second autonomous vehicle is operating along the trajectory. In some embodiments, the processor of the second autonomous vehicle is configured to delete the data structure in response to a determination that the data structure is associated with a timestamp that is more than or outside of a time window from a time when the second autonomous vehicle is expected to drive along the trajectory or when the second autonomous vehicle is operating along the trajectory, and where the time window is based on a type of the driving condition.

In some embodiments, the driving condition includes a police vehicle, an ambulance, a fire engine, a fire truck, an emergency vehicle, a pedestrian, a bike, a construction zone, an accident area, a traffic jam, a pothole in the road, roadkill, or other objects or obstructions.

In some embodiments, the determining that the location of the driving condition is related to the trajectory includes determining that the location of the driving condition is within a second predetermined distance of the trajectory of the second autonomous vehicle. In some embodiments, the determining that the location of the driving condition is related to the trajectory includes determining that the location of the driving condition is within a predetermined area that includes the trajectory of the second autonomous vehicle. In some embodiments, the second data structure is the same as the first data structure. In some embodiments, the information included in the data structure is configurable. In some embodiments, the information included in the data structure is predetermined.

In some embodiments, the second data structure is sent with information related to the trajectory to the second autonomous vehicle, and the information related to the trajectory includes a starting address and a destination address. In some embodiments, the message is received at a first time, and where the method further comprises: receiving, by the server at a second time later than the first time, a third data structure from a third autonomous vehicle; determining, by the server, that the third data structure includes information about the driving condition on the road or includes information about a second driving condition at a same location as the driving location; and transmitting a fourth data structure to the second autonomous vehicle, where the fourth data structure includes updated information related to the driving condition or includes information about the second driving condition.

In yet another exemplary aspect, the above-described method is embodied in a non-transitory computer readable storage medium comprising code that when executed by a processor, causes the processor to perform the methods described in this patent document.

In yet another exemplary embodiment, a device that is configured or operable to perform the above-described methods is disclosed.

The above and other aspects and their implementations are described in greater detail in the drawings, the descriptions, and the claims.

### BRIEF DESCRIPTION OF THE DRAWING

FIG. 1 illustrates a block diagram of an example vehicle ecosystem to share and/or use map related information.
FIG. 2 shows an example flowchart of operations performed by a remote server and at least two autonomous vehicles.
FIG. 3 shows an exemplary block diagram of a remote server that facilitates sharing of map related information.
FIG. 4 shows an exemplary flowchart for a server to share information about a dynamic object or condition on a road.

### DETAILED DESCRIPTION

A vehicle operating in an autonomous mode may include a computer located in the vehicle sending instructions to one or more devices in the vehicle to perform autonomous driving operations (e.g., steer, apply brakes, change gear, etc.,), where the instructions can be based on information received from sensors (e.g., cameras, LiDARs, etc.,) on the vehicle. When the vehicle operating in the autonomous mode is traveling down a road, the vehicle may operate along a trajectory from a starting location to a destination. The vehicle's computer may determine certain trajectory related information or the vehicle's computer may be sent the trajectory related information by a remote server that may be located in a fixed location away from the autonomous vehicle. The trajectory related information may include static information such as curvature of one or more segments of a road on which the vehicle is expected to drive, positions of traffic signs along the road, number of lanes on the road, speed limit, etc. The vehicle's computer may use such static information to perform autonomous driving operations.

However, in some scenarios, when the vehicle in an autonomous mode operates along the trajectory, the vehicle may encounter dynamic objects or conditions that may not be included in the trajectory related information. For example, the vehicle may encounter an accident, an emergency vehicle (e.g., police car, ambulance, fire truck, etc.,), bike, pedestrian, traffic jam, active accident area, or construction zone along the road associated with the trajectory. The vehicle encountering such scenarios without prior information about the dynamic objects or conditions can be forced to make a late driving maneuver or a potentially reactive maneuver to avoid close interactions with the dynamic object or condition.

To address these technical problems, this patent document describes technical solutions that can allow vehicles to share information related to the dynamic object or condition. For example, a first vehicle that initially encounters a dynamic object or condition may send information about the dynamic object or condition to a remote server so that a second vehicle traveling on the same road or the same trajectory may receive information about the dynamic object or condition before the second vehicle encounters the dynamic object or condition. In this example, the second vehicle can be enabled to alter its trajectory or motion plans far in advance, to perform safer maneuvers such as transitioning or steering to another lane, and/or to move from a center of a current lane to one side of the current lane. The first vehicle and the second vehicle may share the same representation of the road network and the driving environment (e.g., the two vehicles may share the same data structures that represent a portion of a map or a segment of the road, objects on the road, or objects near the road.) This may allow vehicles in a fleet of vehicles to share with each other rich information about the road and/or the driving environment that is understood by onboard software modules that control the operation of the vehicles.

Thus, one of the technical benefits of the technical solutions is that after a vehicle determines a presence and/or additional information about the dynamic object or condition, one or more vehicles traveling to the location where the dynamic object or condition is determined can be provided with information about the dynamic object or condition before they reach that location so that the one or more vehicles can safely navigate around or with the dynamic object or condition. Another technical benefit of the technical solutions is that the one or more vehicles can perform motion planning operations (e.g., determining alternative trajectory, determining additional autonomous driving operation such as steering from one lane to another lane) based on information of the dynamic object or condition before the dynamic object or condition can be detected by the sensors of the one or more vehicles, which can improve the driving performance of the one or more vehicles. In this patent document, the term dynamic object or condition can be referred to as a driving condition.

This patent document first describes in Section I an example vehicle ecosystem for sharing and/or using map related information, and then describes in Section II example techniques for sharing and/or using map related information by autonomous vehicles. The example headings for the various sections below are used to facilitate the understanding of the disclosed subject matter and do not limit the scope of the claimed subject matter in any way. Accordingly, one or more features of one example section can be combined with one or more features of another example section.

### I. Example Vehicle Ecosystem for Sharing and/or Using Map Related Information

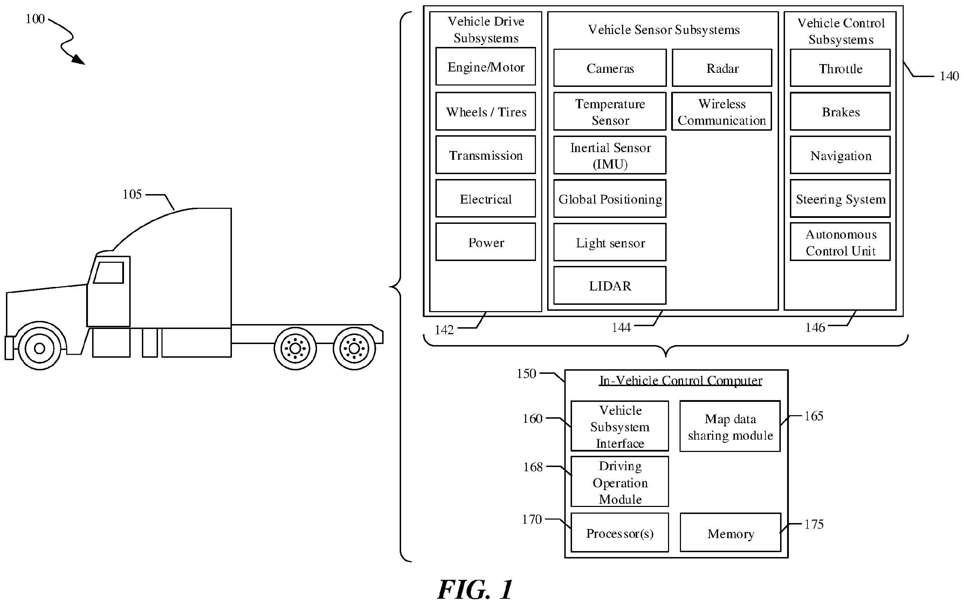

FIG. 1 illustrates a block diagram of an example vehicle ecosystem to share and/or use map related information. The system 100 may include an autonomous vehicle 105, such as a tractor unit of a semi-trailer truck. The autonomous vehicle 105 may include a plurality of vehicle subsystems 140 and an in-vehicle control computer 150. The plurality of vehicle subsystems 140 can include, for example, vehicle drive subsystems 142, vehicle sensor subsystems 144, and vehicle control subsystems 146. FIG. 1 shows several devices or systems being associated with the autonomous vehicle 105. In some embodiments, additional devices or systems may be added to the autonomous vehicle 105, and in some embodiments, some of the devices or systems shown in FIG. 1 may be removed from the autonomous vehicle 105.

An engine/motor, wheels and tires, a transmission, an electrical subsystem, and/or a power subsystem may be included in the vehicle drive subsystems 142. The engine/motor of the autonomous truck may be an internal combustion engine (or gas-powered engine), a fuel-cell powered electric engine, a battery powered electric engine/motor, a hybrid engine, or another type of engine capable of actuating the wheels on which the autonomous vehicle 105 (also referred to as vehicle 105 or truck 105) moves. The engine/motor of the autonomous vehicle 105 can have multiple engines to drive its wheels. For example, the vehicle drive subsystems 142 can include two or more electrically driven motors.

The transmission of the vehicle 105 may include a continuous variable transmission or a set number of gears that translate power created by the engine of the vehicle 105 into a force that drives the wheels of the vehicle 105. The vehicle drive subsystems 142 may include an electrical system that monitors and controls the distribution of electrical current to components within the vehicle drive subsystems 142 (and/or within the vehicle subsystems 140), including pumps, fans, actuators, in-vehicle control computer 150 and/or sensors (e.g., cameras, LiDARs, RADARs, etc.,). The power subsystem of the vehicle drive subsystems 142 may include components which regulate a power source of the vehicle 105.

Vehicle sensor subsystems 144 can include sensors which are used to support general operation of the autonomous truck 105. The sensors for general operation of the autonomous vehicle may include, for example, one or more cameras, a temperature sensor, an inertial sensor, a global positioning system (GPS) receiver, a light sensor, a LiDAR system, a radar system, and/or a wireless communications system.

The vehicle control subsystems 146 may include various elements, devices, or systems including, e.g., a throttle, a brake unit, a navigation unit, a steering system, and an autonomous control unit. The vehicle control subsystems 146 may be configured to control operation of the autonomous vehicle, or truck, 105 as a whole and operation of its various components. The throttle may be coupled to an accelerator pedal so that a position of the accelerator pedal can correspond to an amount of fuel or air that can enter the internal combustion engine. The accelerator pedal may include a position sensor that can sense a position of the accelerator pedal. The position sensor can output position values that indicate the positions of the accelerator pedal (e.g., indicating the amount by which the accelerator pedal is actuated.)

The brake unit can include any combination of mechanisms configured to decelerate the autonomous vehicle 105. The brake unit can use friction to slow the wheels of the vehicle in a standard manner. The brake unit may include an anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically based on, e.g., traffic or road conditions, while, e.g., the autonomous vehicle 105 is in operation. In some embodiments, the navigation unit may be configured to incorporate data from a GPS device and one or more predetermined maps so as to determine the driving path for the autonomous vehicle 105. The steering system may represent any combination of mechanisms that may be operable to adjust the heading of the autonomous vehicle 105 in an autonomous mode or in a drivercontrolled mode of the vehicle operation.

The autonomous control unit may include a control system (e.g., a computer or controller comprising a processor) configured to identify, evaluate, and avoid or otherwise negotiate potential obstacles in the environment of the autonomous vehicle 105. In general, the autonomous control unit may be configured to control the autonomous vehicle 105 for operation without a driver or to provide driver assistance in controlling the autonomous vehicle 105. In some example embodiments, the autonomous control unit may be configured to incorporate data from the GPS device, the radar, the LiDAR, the cameras, and/or other vehicle sensors and subsystems to determine the driving path or trajectory for the autonomous vehicle 105.

An in-vehicle control computer 150, which may be referred to as a vehicle control unit or VCU, can include, for example, any one or more of: a vehicle subsystem interface 160, a map data sharing module 165, a driving operation module 168, one or more processors 170, and/or a memory 175. This in-vehicle control computer 150 may control many, if not all, of the operations of the autonomous truck 105 in response to information from the various vehicle subsystems 140. The memory 175 may contain processing instructions (e.g., program logic) executable by the processor(s) 170 to perform various methods and/or functions of the autonomous vehicle 105, including those described in this patent document. For instance, the data processor 170 executes the operations associated with vehicle subsystem interface 160, map data sharing module 165, and/or driving operation module 168. The in-vehicle control computer 150 can control one or more elements, devices, or systems in the vehicle drive subsystems 142, vehicle sensor subsystems 144, and/or vehicle control subsystems 146. For example, the driving operation module 168 in the in-vehicle control computer 150 may operate the autonomous vehicle 105 in an autonomous mode in which the driving operation module 168 can send instructions to various elements or devices or systems in the autonomous vehicle 105 to enable the autonomous vehicle to drive along a determined trajectory. For example, the driving operation module 168 can send instructions to the steering system to steer the autonomous vehicle 105 along a trajectory, and/or the driving operation module 168 can send instructions to apply an amount of brake force to the brakes to slow down or stop the autonomous vehicle 105.

The map data sharing module 165 can be also configured to communicate and/or interact via a vehicle subsystem interface 160 with the systems of the autonomous vehicle. The map data sharing module 165 can, for example, send and/or receive data related to the trajectory of the autonomous vehicle 105 as further explained in Section II. The vehicle subsystem interface 160 may include a software interface (e.g., application programming interface (API)) through which the map data sharing module 165 and/or the driving operation module 168 can send or receive information to one or more devices in the autonomous vehicle 105.

The memory 175 may include instructions to transmit data to, receive data from, interact with, or control one or more of the vehicle drive subsystems 142, vehicle sensor subsystems 144, or vehicle control subsystems 146. The in-vehicle control computer (VCU) 150 may control the operation of the autonomous vehicle 105 based on inputs received by the VCU from various vehicle subsystems (e.g., the vehicle drive subsystems 142, the vehicle sensor subsystems 144, and the vehicle control subsystems 146). The VCU 150 may, for example, send information (e.g., commands, instructions or data) to the vehicle control subsystems 146 to direct or control functions, operations or behavior of the autonomous vehicle 105 including, e.g., its trajectory, velocity, steering, braking, and signaling behaviors. The vehicle control subsystems 146 may receive a course of action to be taken from one or more modules of the VCU 150 and may, in turn, relay instructions to other subsystems to execute the course of action.

### II. Techniques for Sharing and/or Use of Map Related Information by Autonomous Vehicles

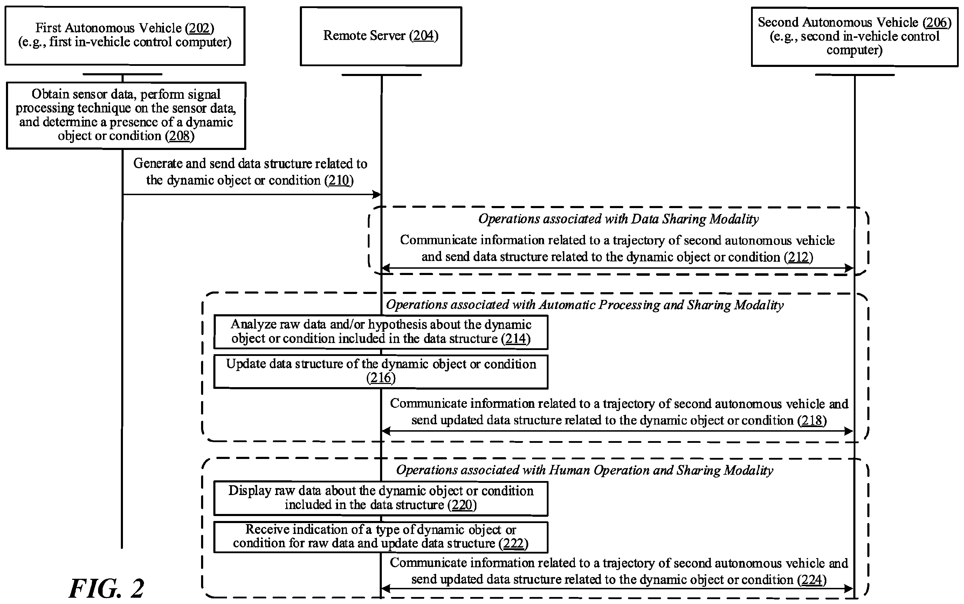

FIG. 2 shows a flowchart of an example scenario where a first autonomous vehicle 202 detects a presence of a dynamic object or condition along a trajectory on which the first autonomous vehicle 202 is being driven, the first autonomous vehicle 202 may send a data structure that indicates information about the dynamic object or condition to the remote server 204. Subsequently, when a second autonomous vehicle 206 travels along a trajectory that is close to the location of the dynamic object or condition, the second autonomous vehicle 206 and/or remote server 204 can communicate with each other so that an information about the dynamic object or condition is sent to and received by the second autonomous vehicle 206. In some embodiments, the data structure may be sent or received in a message, and/or information included in the data structure may describe information included in the message.

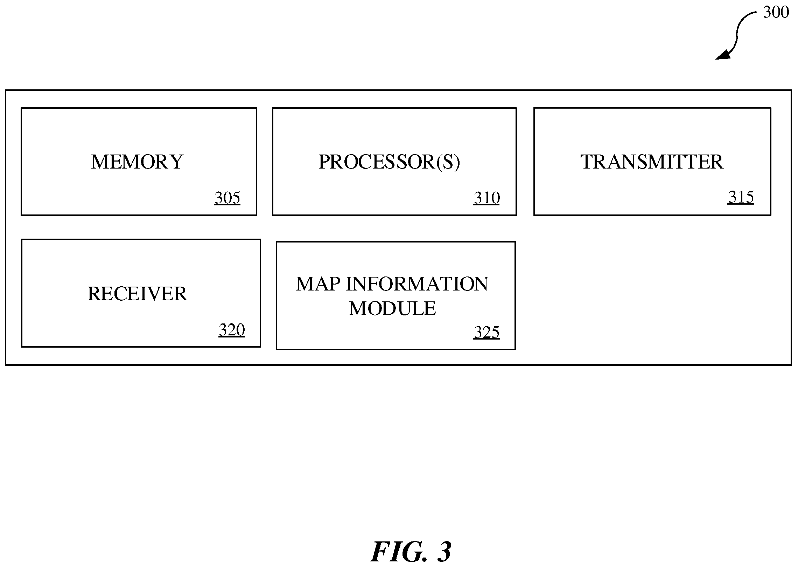

Each of the two autonomous vehicles 202, 206 may include a plurality of vehicle subsystems (shown as 140 in FIG. 1) and an in-vehicle control computer (shown as 150 in FIG. 1). Thus, as shown in FIG. 2, the first autonomous vehicle 202 and the second autonomous vehicle 206 respectively include a first in-vehicle control computer and a second in-vehicle control computer, where both the first and second in-vehicle control computers may have the devices and/or modules as described for the in-vehicle control computer 150 in FIG. 1. The operations described for the first and second autonomous vehicles 202, 206 are performed by their respective in-vehicle control computers. The remote server 204 may have devices and/or modules as described for the remote server (also shown as 300 in FIG. 3). The remote server 204 may be one or more servers that may be located in one or more fixed locations remote from the autonomous vehicles 202, 206.

At operation 208, the map data sharing module of the first in-vehicle control computer of the first autonomous vehicle 202 can obtain sensor data (e.g., image) from one or more sensors (e.g., camera(s)) located on the first autonomous vehicle, perform an signal processing technique (e.g., image processing) on the sensor data, and determine that the first autonomous vehicle 202 is driven towards or through an area that includes a dynamic object or condition (e.g., an emergency vehicle, construction sign, construction zone, active accident area, traffic jam).

At operation 210, the map data sharing module of the first in-vehicle control computer can generate and send to the remote server 204 a data structure that includes information about the dynamic object or condition. In some embodiments, the map data sharing module can perform operation 210 in response to determining a confidence value for information about the dynamic object or condition. The confidence level may indicate a level of confidence that the information corresponds to a dynamic object, a particular type of dynamic object, a condition, or an indication that the condition is greater than a predetermined threshold. The map data sharing module may send the information about the dynamic object or condition in response to determining that the confidence level is greater than a predetermined threshold confidence level. This may minimize excessive transmission of information about dynamic objects and conditions when there is uncertainty about the dynamic object or condition.

The information included in the data structure and/or further operations performed by the remote server may depend on a data sharing modality in which minimum amount of information is included in the data structure or an automatic processing and sharing modality in which raw data and/or additional information about the dynamic object or condition is included as further explained at least in the Sections II. (a) to II.(c) below. FIG. 2 separately shows operations associated with the data sharing modality, operations associated with the automatic processing and sharing modality, and operations associated with the human operation and sharing modality. After operation 210, in some embodiments, only the operations associated with the data sharing modality may be performed, or only the operations associated with the automatic processing and sharing modality may be performed, or only the operations associated with the human operation and sharing modality may be performed. In some other embodiments, one or more operations of one modality can be combined with one or more operations of another modality. Additional operations related to data structure(s) are described in Sections II.(d) to II.(g).

### II. (a). Data Sharing Modality

In FIG. 2, the operations associated with the data sharing modality are indicated in the rectangle with the broken line with the words "operations for data sharing modality." In some embodiments of the data sharing modality, the data structure generated by the map sharing module at operation 210 can have a predetermined structure so that a minimum amount of information about the dynamic object or condition can be indicated to the remote server 204. The minimum amount of information can fully represent or fully characterize the detected dynamic object or condition. In such embodiments, the data structure can have a compact data size to minimize the amount of information sent by the map data sharing module related to the dynamic object or condition and/or to keep wireless communication resources available for other transmissions by the first in-vehicle control computer. In some embodiments, the data structure may include a type of the dynamic object or condition, location of the dynamic object or condition, confidence value (e.g., between 0 to 100% or 0.0 to 1.0) that indicates a level of confidence that a detected object or the condition is associated with the type indicated in the data structure, a timestamp (e.g., date and/or time) when the dynamic object or condition is detected, and/or a unique identifier related to a dynamic object or condition. For example, if the map data sharing module determines a presence of a police car stopped on a road, the data structure can include a police car identifier (e.g., the words "police car"), an estimate of a location of the police car, the number "0. 8" which indicates that the map data sharing module is 80% confident that the objected detected is a police car, and 01:00 at 3/11/22 indicating a timestamp when the police car was detected. As shown above, the timestamp may include a date and may be represented by 24-hour clock format. In some embodiments, the resolution of the timestamp may be in milliseconds (e.g., 0.001 seconds) or tenths of milliseconds (e.g., 0.0001 seconds). In some embodiments, the format of the timestamp may be greater than 12 digits.

In some embodiments for any one or more of the three modalities described in FIG. 2, the content included in the data structure can be predetermined. For example, as mentioned above, the data structure may include a type of the dynamic object or condition, location of the dynamic object or condition, confidence value, identifier of the dynamic object or condition, and/or timestamp. In some other embodiments for any one or more of the three modalities in FIG. 2, the content included in the data structure can be configurable so that one or more additional types of information about dynamic objects and conditions can be requested from autonomous vehicles to include in data structures, or one or more types of information can be removed from being included in the data structures. A technical benefit of having a configurable content of the data structure is that it can allow for greater flexibility and fine-tuning of the information included in the data structure.

In embodiments related to the data sharing modality, the map information module (shown as 325 in FIG. 3) of the remote server can store the data structure and can send the data structure without further processing to one or more other autonomous vehicles. For example, at operation 212 in FIG. 2, a driving operation module of the second in-vehicle control computer can send to the remote server 204 information (e.g., starting address and destination address) related to a trajectory on which the second autonomous vehicle 206 is expected to be driven. At operation 212, the map information module of the remote server can determine, based on the information related to the trajectory of the second autonomous vehicle 206 that a location of a dynamic object or condition (e.g., the one identified at operation 208) is within a predetermined area (e.g., an ellipse) that includes the trajectory of the second autonomous vehicle 206 or is within a predetermined distance of the trajectory of the second autonomous vehicle 206. At operation 212, the map information module of the remote server can send the data structure related to the dynamic object or condition to the map data sharing module of the second in-vehicle control computer. For any one or more of the three described modalities in FIG. 2, the map information module of the remote server can send the data structure of the dynamic object or condition to the map data sharing module of the second in-vehicle control computer before the second autonomous vehicle reaches a location of the dynamic object or condition.

In another example, at operation 212 in FIG. 2, the map information module of the remote server can send in a single step or single message the information (e.g., starting address and destination address) related to a trajectory on which the second autonomous vehicle 206 is expected to be driven and one or more data structures of one or more dynamic objects or conditions within a predetermined area of or within a predetermined distance of the trajectory of the second autonomous vehicle 206. In some embodiments, at operation 212, a plurality of data structures corresponding to a plurality of dynamic objects or condition can be sent by the map information module in response to determining that the locations of the plurality of dynamic objects is within the predetermined distance or the predetermined area of the trajectory of the second autonomous vehicle 206.

For the data sharing modality, in some embodiments, one or more data structures of one or more dynamic objects or conditions sent at operation 212 can be the same as the one or more data structures that were generated and sent by the map data sharing module of the first in-vehicle control computer at operation 210. In some other embodiments for any one or more of the three described modalities in FIG. 2, the map information module of the remote module can aggregate and/or process information related to a same dynamic object or condition that is sent by multiple autonomous vehicles. One of the technical benefits of processing information received about a dynamic object or condition from multiple autonomous vehicles is that the processed information about the dynamic object or condition can be more accurate than a single observation indicated in data structure by one autonomous vehicle. Another technical benefit of processing the information about a dynamic object or condition is that the processed information can be included in an updated data structure about the dynamic object or condition sent to the second autonomous vehicle 206. For example, if an autonomous vehicle sends a first data structure that indicates a presence of a police car at a first time at a first location, and if another autonomous vehicle sends a second data structure that only indicates a presence of an ambulance at the same first location at a second time later than the first time, then the map information module can determine that second data structure characterizes the most recent information so that the map information module can send the second data structure to another autonomous vehicle that is expected to operate within a predetermined distance or within a predetermined area of the first location of the dynamic object or condition.

In some embodiments, the map information module of the remote server can perform weighted analysis on the information sent in data structures by multiple autonomous vehicles to determine whether information in a data structure about a dynamic object or condition from one autonomous vehicle is more accurate than information in another data structure about the same dynamic object or condition from another autonomous vehicle. For example, if a first data structure from a first autonomous vehicle indicates a presence of a traffic sign in a construction zone with the words "45 mph", and if a second data structure from a second autonomous vehicle indicates a presence of a traffic sign in the same construction zone with the words "55 mph," then the map information module of the remote server can determine which data structure more accurately reflects the information of the traffic sign. In this example, if the first and second data structures include confidence values associated with the traffic sign, then the map information module can determine that the data structure with the highest confidence value is the most accurate. In another implementation of this example, if the first and second data structures include the respective speeds of the first and second autonomous vehicles, then the map information module can determine that the data structure sent by the autonomous vehicle having the lowest speed may be more accurate.

In some embodiments, the map information module of the remote server can perform an aggregate analysis on the information sent in data structures by multiple autonomous vehicles to determine a pattern related to the dynamic object or condition. For example, a determined pattern can indicate a growing traffic jam or an increased construction zone or frequent construction zones based on data structures received over time from multiple autonomous vehicles. In some embodiments, data structure indicating a pattern related to the dynamic object or condition can be sent to the map data sharing module of the second autonomous vehicle 206, where such a data structure may include an increased traffic identifier (e.g., the words "increased traffic") or a frequent construction identifier (e.g., the words "frequent construction") to indicate a pattern associated with the dynamic object or condition.

In some other embodiments for any one or more of the three described modalities in FIG. 2, after a map information module sends a data structure for a dynamic object or condition to second autonomous vehicle 206, if the map information module of the remote server determines that an updated information for that dynamic object or condition is available or determined, then the map information module can send an updated data structure for that dynamic object or condition to the second autonomous vehicle 206. In one example implementation, the map information module can perform a non-mutable update operation by sending the updated data structure that includes all information about the dynamic object or condition with an old information (e.g., type of dynamic object or condition) replaced with the updated information. In another example implementation, the map information module can perform a mutable update operation by sending the updated data structure with only the updated information and a unique identifier of the dynamic object or condition. In this example implementation, the map data sharing module can determine, based on the unique identifier, the dynamic object or condition that is related to the updated information being provided.

### II.(b). Automatic Processing and Sharing Modality

In FIG. 2, the operations associated with the automatic processing and sharing modality are indicated in the rectangle with the broken line with the words "automatic processing and data sharing modality." In some embodiments of the automatic processing and sharing modality, the data structure generated by the map sharing module at operation 210 can have a predetermined structure that may include raw data about the dynamic object or condition, and a hypothesis about the dynamic object or condition, location of the dynamic object or condition, a time when the dynamic object or condition is detected, and/or an identifier of the dynamic object or condition. Raw data about the dynamic object or condition may include sensor data (e.g., one or more images) that indicate a presence of the dynamic object or condition. A hypothesis about the dynamic object or condition may be an indication of a possible dynamic object or condition being located in the area, or it may include a confidence value associated with the detection of the dynamic object or condition as explained in Section II. (a) of this patent document, or it may include a possible construction zone identifier (e.g., the words "possible construction zone") or an unknown object identifier (e.g., the words "unknown object").

At operation 214, the map information module of the remote server can receive the data structure and can analyze (e.g., perform image or signal processing on) the raw data and/or the hypothesis to determine one or more characteristics of the possible dynamic object or condition in the raw data. For example, the map information module can perform image processing techniques on an image sent by the autonomous vehicle to determine that the image includes a construction zone or that a number of lanes to the left of the autonomous vehicle has a traffic jam. In this example, the map information module can perform image processing techniques based on the information provided by the hypothesis field such as "possible construction zone" or "unknown object" as mentioned above. At operation 214, the map information module can create, update or delete the hypothesis associated with the dynamic object or condition. In the example described above, where the map information module determines that the image includes a construction zone, the hypothesis in the data structure can be updated to "construction zone" or the hypothesis can be removed from the data structure and the type of the dynamic object can be included in the data structure with the construction zone identifier (e.g., the words "construction zone"). In some embodiments, if the map information module cannot determine a type of the dynamic object from the raw data, then the map information module can perform operation 220 as further described in Section II. (c) for the human operation and sharing modality.

After the map information module performs analysis on the raw data and determines one or more characteristics of the dynamic object or condition, at operation 216, the map information module can update the data structure associated with the dynamic object or condition so that the updated data structure can be sent to one or more autonomous vehicles. For example, in operation 218, the map information module of the remote server can determine, based on the information related to the trajectory of the second autonomous vehicle 206 that a location of a dynamic object or condition (e.g., the one whose data structure is updated in operation 216) is within a predetermined area (e.g., an ellipse) that includes the trajectory of the second autonomous vehicle 206 or is within a predetermined distance of the trajectory of the second autonomous vehicle 206. At operation 218, the map information module of the remote server can send the updated data structure related to the dynamic object or condition to the map data sharing module of the second in-vehicle control computer.

### II.(c). Human Operation and Sharing Modality

In FIG. 2, the operations associated with the human operation and sharing modality are indicated in the rectangle with the broken line with the words "human operation and sharing modality." In some embodiments of the human operation and sharing modality, if the data structure generated by the map sharing module at operation 210 includes raw data about the dynamic object or condition, then the map information module of the remote server can present the raw data to a display at operation 220. At operation 222, a human operator can use a graphic user interface (GUI) shown with the raw data to select or identify a type of the dynamic object or condition (e.g., emergency vehicle, construction zone, traffic jam, etc.,). In response to receiving an indication of the type of dynamic object or condition from the display, at operation 222, the map information module can update the data structure associated with the dynamic object or condition so that the updated data structure can be sent to one or more autonomous vehicles that are expected to travel within a predetermined distance of or within a predetermined area of the location of the dynamic object or condition.

In operation 224, the map information module of the remote server can determine, based on the information related to the trajectory of the second autonomous vehicle 206 that a location of a dynamic object or condition (e.g., the one whose data structure is updated in operation 222) is within a predetermined area (e.g., an ellipse) that includes the trajectory of the second autonomous vehicle 206 or is within a predetermined distance of the trajectory of the second autonomous vehicle 206. At operation 224, the map information module of the remote server can send the updated data structure related to the dynamic object or condition to the map data sharing module of the second in-vehicle control computer.

### II. (d) Operations to Update Dynamic Object or Condition

In some embodiments for any one or more of the three described modalities in FIG. 2, after the map data sharing module of the second in-vehicle control computer of the second autonomous vehicle 206 has received the data structure (from operation 212, or operation 218, or operation 224), the map data sharing module can dedicate computational resources to determine updates to the dynamic object or condition. For example, the map data sharing module of the second in-vehicle control computer obtain a location of the second autonomous vehicle 206 provided by a GPS device on or in the second autonomous vehicle 206 and determines that the location of the second autonomous vehicle 206 is within a predetermined distance of the location of a dynamic object or condition indicated by the received data structure. In this example, upon determining that the second autonomous vehicle 206 is within the predetermined distance of the location of a dynamic object or condition, the map data sharing module can analyze sensor data corresponding to a region that includes the dynamic object or condition. The map data sharing module can determine that the dynamic object or condition exists or does not exist, that the dynamic object or condition is associated with another dynamic object or condition at the same location, and/or additional characteristics of the dynamic object or condition.

### II.(e) Driving Operations Based on Information in the Data Structure

In some embodiments, the data structure received by the map data sharing module (from operation 212, or operation 218, or operation 224) can include a field that indicates a recommended driving operation by the map information module of the remote server. For example, in response to the map information module determining that a data structure indicates a presence of an emergency vehicle such as a fire truck, the map information module can include in the data structure a recommended driving operation, such as a bias operation identifier (e.g., the word "bias.") The bias operation identifier can indicate to the second autonomous vehicle to steer so that the second autonomous vehicle can move from a center of a current lane to one side (e.g., to the left) of the current lane away from the shoulder region (also known as emergency stopping lane) of the road. When the map data sharing module of the second in-vehicle control computer receives the data structure that includes a bias operation identifier (e.g., the word "bias"), the map data sharing module can send instructions to the driving operation module, where the instruction may include a bias command (e.g., the word "bias") and the location of the dynamic object or condition. The driving operation module of the second in-vehicle control computer can send instructions to a motor in the steering system to move from the center of the lane on which the second autonomous vehicle is driving to one side of the same lane upon determining that the location of the second autonomous vehicle 206 is within a predetermined distance of the location of the dynamic object or condition. In another example, recommended driving operation can include a lane change operation identifier (e.g., the word "change lane") to indicate to the second autonomous vehicle 206 to steer from a current lane on which the second autonomous vehicle 206 is operating to an adjacent lane that is adjacent to the current lane.

In some other embodiments, the driving operation module of the second in-vehicle control computer can determine an appropriate driving related operation based on the information provided by the data structure (received at operation 212, or at operation 218, or at operation 224). For example, when the driving operation module determines that the second autonomous vehicle 206 is at or within a predetermined distance of a location of the dynamic object or condition (as indicated in the data structure), then the driving operation module send instructions to a motor in the steering system to move from the center of the lane on which the second autonomous vehicle 206 is driving to one side of the same lane, or to steer from a current lane on which the second autonomous vehicle 206 is operating to an adjacent lane that is adjacent to the current lane.

### II. (f) Operations to Update a Map Related Information

In some embodiments, the map information module of the remote server may update a map related information of a road based on a data structure of a dynamic object or condition. For example, if the map information module determines that the dynamic object or condition is of a particular predetermined type (e.g., construction zone), the map information module can send the data structure along with a map to be displayed so that a human operator can use the GUI to indicate the lanes on which autonomous vehicles cannot operate or can indicate only the lanes on which the autonomous vehicle can operate. Information about changes to the lane can be stored in another data structure associated with the road or map along with location(s) where restrictions to the lanes are enforced.

In operations 212, 218 and 224 of FIG. 2, when the map information module communicates the information related to a trajectory with the second autonomous vehicle 206, the map information module can also send a data structure for the road or map that indicates the identity and location of one or more lanes on which the second autonomous vehicle 206 is expected to operate or on which the second autonomous vehicle 206 is not to operate. In this example, when the driving operation module of the second in-vehicle control computer determines that the location of the second autonomous vehicle 206 is within a predetermined distance of the location the lanes that are restricted and if the driving operation module determines that the second autonomous vehicle is operating on a current lane on which it cannot operate, then the driving operation module can send instructions to a motor in the steering system to steer from the current lane to another lane on which the second autonomous vehicle 206 can operate, where the identity of the another lane may be indicated by the data structure of the road or map.

### II.(g) Operations to Expiration of Data Structure of a Dynamic Object or Condition

In some embodiments, a map data sharing module of an in-vehicle control computer of an autonomous vehicle can remove or delete one or more data structures in response to determining that the one or more data structures are associated with a timestamp that is more than or outside of a predetermined time window from a current time when the autonomous vehicle is operating along a trajectory on a road or when the autonomous vehicle is expected to drive along the trajectory on the road. For example, the map data sharing module can delete a data structure associated with a time stamp of 9:00 am on one day if the map data sharing module determines that the autonomous vehicle is driving at 12pm on the same day and the predetermined time window is 2 hours. In this example, the map data sharing module can store one or more data structures that have a timestamp between 10am and 12pm on the day on which the autonomous vehicle is expected to drive.

In some embodiments, the map data sharing module can remove or delete certain data structures in response to determining that the data structures are associated with a timestamp that is more than or outside of a configurable time window from a current time. The configurable time window may be associated with a particular type of dynamic object or condition. For example, the predetermined time window for an emergency vehicle may be 1 hour and a predetermined time window for a construction zone may be 12 hours. In this example, the map data sharing module may delete a data structure of an emergency vehicle that is associated with a timestamp more than 2 hours from a current time when the autonomous vehicle is operating, and the data sharing module may keep or may store a data structure of a construction zone that is associated with a timestamp less than 12 hours from a current time when the autonomous vehicle is operating.

In some embodiments, the map data sharing module can obtain one or more data structures for one or more dynamic objects or conditions before the autonomous vehicle starts driving from a starting location to its destination. In such embodiments, the map data sharing module can pre-fetch information about the dynamic objects or conditions in an area where wireless connection exists between the autonomous vehicle and a communication device (e.g., cell tower or local wireless device). In some embodiments, when the autonomous vehicle is traveling through an area with a weak wireless signal but for which the autonomous vehicle has detected a dynamic object or condition, the map data sharing module can store the data structure for the dynamic object or condition until a wireless connection is available. In such embodiments, the map data sharing module can transmit the data structure upon determining that a wireless connection is available.

FIG. 3 shows an exemplary block diagram of a remote server that facilitates sharing of map related information. The remote server 300 includes at least one processor 310 and a memory 305 having instructions stored thereupon. The instructions upon execution by the processor 310 configure the remote server 300 and/or the various modules of the remote server 300 to perform the operations described in FIGS. 1 to 2 and/or 4 and in the various embodiments described in this patent document. The transmitter 315 and receiver 320 may send and receive information, respectively.

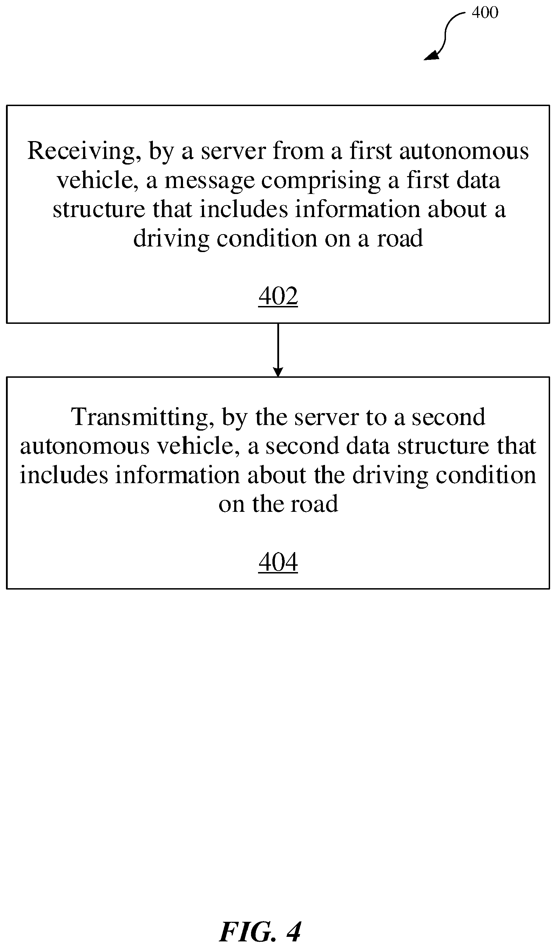

FIG. 4 shows an exemplary flowchart 400 for a server to share information about a dynamic object or condition on a road. The operations described in FIG. 4 may be performed by the map information module of the remote server. Operation 402 includes receiving, by a server from a first autonomous vehicle, a message comprising a first data structure that includes information about a driving condition on a road. Operation 404 includes transmitting, by the server to a second autonomous vehicle, a second data structure that includes information about the driving condition on the road, where the second data structure is transmitted in response to a determination that a location of the driving condition is related to a trajectory on which the second autonomous vehicle is operating or is expected to drive, where the second data structure is transmitted to the second autonomous vehicle before the second autonomous vehicle reaches the location of the driving condition, and where the server is located in a fixed location outside of the first autonomous vehicle and the second autonomous vehicle.

In some embodiments, the second data structure includes a recommended driving operation, and the instructions to the one or more devices in the second autonomous vehicle are in accordance with the recommended driving operation. In some embodiments, recommended driving operation indicates a recommendation to steer from a center of a lane on which the second autonomous vehicle is operating to one side of the lane. In some embodiments, the recommended driving operation indicates to the second autonomous vehicle to steer from a lane on which the second autonomous vehicle is operating to another lane that is adjacent to the lane. In some embodiments, the data structure includes a type of the driving condition, a location of the driving condition, a confidence value that indicates a level of confidence that the driving condition is associated with the type, a timestamp when the driving condition is detected, and/or a unique identifier related to the driving condition.

In some embodiments, the data structure includes sensor data obtained by a sensor on the first autonomous vehicle, a hypothesis about the driving condition, a location of the driving condition, a timestamp when the driving condition is detected, and/or a unique identifier related to the driving condition. In some embodiments, the method further includes determining one or more characteristics of the driving condition based on analysis of the sensor data; and updating the data structure to include the one or more characteristics, where the second data structure transmitted to the second autonomous vehicle includes the one or more characteristic. In some embodiments, the method further includes displaying the sensor data on a monitor; receiving indication of one or more characteristics of the driving condition via a graphical user interface (GUI) from the monitor; and updating the data structure to include the one or more characteristics, where the second data structure transmitted to the second autonomous vehicle includes the one or more characteristic.

In some embodiments, the second autonomous vehicle includes a computer that includes a processor configured to: receive the second data structure; perform a determination that the second autonomous vehicle is at or within a first predetermined distance of the location of the driving condition; and send, in response to the determination, instructions to one or more devices in the second autonomous vehicle, where the instructions cause the second autonomous vehicle to perform a driving related operation responsive to the location of the driving condition. In some embodiments, the processor of the second autonomous vehicle is configured to delete the data structure in response to a determination that the data structure is associated with a timestamp that is more than or outside of a predetermined time window from a time when the second autonomous vehicle is expected to drive along the trajectory or when the second autonomous vehicle is operating along the trajectory. In some embodiments, the processor of the second autonomous vehicle is configured to delete the data structure in response to a determination that the data structure is associated with a timestamp that is more than or outside of a time window from a time when the second autonomous vehicle is expected to drive along the trajectory or when the second autonomous vehicle is operating along the trajectory, and where the time window is based on a type of the driving condition.

In some embodiments, the driving condition includes a police vehicle, an ambulance, a fire engine, a fire truck, an emergency vehicle, a pedestrian, a bike, a construction zone, an accident area, or a traffic jam.

In some embodiments, the determining that the location of the driving condition is related to the trajectory includes determining that the location of the driving condition is within a second predetermined distance of the trajectory of the second autonomous vehicle. In some embodiments, the determining that the location of the driving condition is related to the trajectory includes determining that the location of the driving condition is within a predetermined area that includes the trajectory of the second autonomous vehicle. In some embodiments, the second data structure is the same as the first data structure. In some embodiments, the information included in the data structure is configurable. In some embodiments, the information included in the data structure is predetermined.

In some embodiments, the second data structure is sent with information related to the trajectory to the second autonomous vehicle, and the information related to the trajectory includes a starting address and a destination address. In some embodiments, the message is received at a first time, and where the method further comprises: receiving, by the server at a second time later than the first time, a third data structure from a third autonomous vehicle; determining, by the server, that the third data structure includes information about the driving condition on the road or includes information about a second driving condition at a same location as the driving location; and transmitting a fourth data structure to the second autonomous vehicle, where the fourth data structure includes updated information related to the driving condition or includes information about the second driving condition.

In some embodiments, an apparatus for autonomous vehicle operation comprising a processor, configured to implement a method recited in this document. In some embodiments, a computer readable program storage medium having code stored thereon, the code, when executed by a processor, causing the processor to implement a method recited in this patent document. In some embodiments, a system for sharing driving-related information with an autonomous vehicle comprises the server (e.g., the remote server) and at least the second autonomous vehicle.

In this document the term "exemplary" is used to mean "an example of' and, unless otherwise stated, does not imply an ideal or a preferred embodiment.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

### Numbered statements of invention:

1. A system for sharing driving related information with an autonomous vehicle, comprising:
   a server that includes a processor configured to:
   receive, from a first autonomous vehicle, a message comprising a first data structure that includes information about a driving condition on a road; and
   transmit, to a second autonomous vehicle, a second data structure that includes information about the driving condition on the road,
      wherein the second data structure is transmitted in response to a determination that a location of the driving condition is related to a trajectory on which the second autonomous vehicle is operating or is expected to drive,
      wherein the second data structure is transmitted to the second autonomous vehicle before the second autonomous vehicle reaches the location of the driving condition, and
      wherein the server is located in a fixed location outside of the first autonomous vehicle and the second autonomous vehicle.
2. The system of statement 1, wherein the second data structure includes a recommended driving operation, and wherein the instructions to the one or more devices in the second autonomous vehicle is in accordance with the recommended driving operation.
3. The system of statement 2, wherein the recommended driving operation indicates a recommendation to steer from a center of a lane on which the second autonomous vehicle is operating to one side of the lane.
4. The system of statement 2 or 3, wherein the recommended driving operation indicates to the second autonomous vehicle to steer from a lane on which the second autonomous vehicle is operating to another lane that is adjacent to the lane.
5. The system of any preceding statement, wherein the data structure includes a type of the driving condition, a location of the driving condition, a confidence value that indicates a level of confidence that the driving condition is associated with the type, a timestamp when the driving condition is detected, and/or a unique identifier related to the driving condition.
6. The system of any preceding statement, wherein the data structure includes sensor data obtained by a sensor on the first autonomous vehicle, a hypothesis about the driving condition, a location of the driving condition, a timestamp when the driving condition is detected, and/or a unique identifier related to the driving condition.
7. The system of statement 6, wherein the processor of the server is further configured to:
   determine one or more characteristics of the driving condition based on analysis of the sensor data; and
   update the data structure to include the one or more characteristics,
   wherein the second data structure transmitted to the second autonomous vehicle includes the one or more characteristic.
8. The system of statement 6 or 7, wherein the processor of the server is further configured to:
   display the sensor data on a monitor;
   receive indication of one or more characteristics of the driving condition via a graphical user interface from the monitor; and
   update the data structure to include the one or more characteristics,
   wherein the second data structure transmitted to the second autonomous vehicle includes the one or more characteristic.
9. The system of any preceding statement, wherein the second autonomous vehicle includes a computer that includes a processor configured to:
   receive the second data structure;
   perform a determination that the second autonomous vehicle is at or within a first predetermined distance of the location of the driving condition; and
   send, in response to the determination, instructions to one or more devices in the second autonomous vehicle, wherein the instructions cause the second autonomous vehicle to perform a driving related operation responsive to the location of the driving condition.
10. The system of statement 9, wherein the processor of the second autonomous vehicle is configured to delete the data structure in response to a determination that the data structure is associated with a timestamp that is more than or outside of a predetermined time window from a time when the second autonomous vehicle is expected to drive along the trajectory or when the second autonomous vehicle is operating along the trajectory.
11. The system of statement 9 or 10,
   wherein the processor of the second autonomous vehicle is configured to delete the data structure in response to a determination that the data structure is associated with a timestamp that is more than or outside of a time window from a time when the second autonomous vehicle is expected to drive along the trajectory or when the second autonomous vehicle is operating along the trajectory, and
   wherein the time window is based on a type of the driving condition.
12. The system of any preceding statement, wherein the driving condition includes a police vehicle, an ambulance, a fire engine, a fire truck, an emergency vehicle, a pedestrian, a bike, a construction zone, an accident area, or a traffic jam.
13. A method of sharing driving related information with an autonomous vehicle, comprising:
   receiving, by a server from a first autonomous vehicle, a message comprising a first data structure that includes information about a driving condition on a road; and
   transmitting, by the server to a second autonomous vehicle, a second data structure that includes information about the driving condition on the road,
      wherein the second data structure is transmitted in response to determining that a location of the driving condition is related to a trajectory on which the second autonomous vehicle is operating or is expected to drive,
      wherein the second data structure is transmitted to the second autonomous vehicle before the second autonomous vehicle reaches the location of the driving condition, and
      wherein the server is located in a fixed location outside of the first autonomous vehicle and the second autonomous vehicle.
14. The method of statement 13, wherein the determining that the location of the driving condition is related to the trajectory includes determining that the location of the driving condition is within a second predetermined distance of the trajectory of the second autonomous vehicle.
15. The method of statement 13 or 14, wherein the determining that the location of the driving condition is related to the trajectory includes determining that the location of the driving condition is within a predetermined area that includes the trajectory of the second autonomous vehicle.
16. The method of any of statements 13 to 15, wherein the second data structure is the same as the first data structure.
17. The method of any of statements 13 to 16, wherein the information included in the data structure is configurable.
18. The method of any of statements 13 to 17, wherein the information included in the data structure is predetermined.
19. The method of any of statements 13 to 18,
   wherein the second data structure is sent with information related to the trajectory to the second autonomous vehicle, and
   wherein the information related to the trajectory includes a starting address and a destination address.
20. The method of any of statements 13 to 19, wherein the message is received at a first time, and wherein the method further comprises:
   receiving, by the server at a second time later than the first time, a third data structure from a third autonomous vehicle;
   determining, by the server, that the third data structure includes information about the driving condition on the road or includes information about a second driving condition at a same location as the driving location; and
   transmitting a fourth data structure to the second autonomous vehicle, wherein the fourth data structure includes updated information related to the driving condition or includes information about the second driving condition.
21. An apparatus for autonomous vehicle operation comprising a processor, configured to implement a method recited in one or more of statements 1 to 20.
22. A computer readable program storage medium having code stored thereon, the code, when executed by a processor, causing the processor to implement a method recited in one or more of statements 1 to 20.

## Claims

1. A system for sharing driving related information with an autonomous vehicle, comprising:
a server that includes a processor configured to:
receive, from a first autonomous vehicle, a message comprising a first data structure that includes information about a driving condition on a road; and
transmit, to a second autonomous vehicle, a second data structure that includes information about the driving condition on the road,
wherein the second data structure is transmitted in response to a determination that a location of the driving condition is related to a trajectory on which the second autonomous vehicle is operating or is expected to drive,
wherein the second data structure is transmitted to the second autonomous vehicle before the second autonomous vehicle reaches the location of the driving condition, and
wherein the server is located in a fixed location outside of the first autonomous vehicle and the second autonomous vehicle.

2. The system of claim 1, wherein the second data structure includes a recommended driving operation, and wherein the instructions to the one or more devices in the second autonomous vehicle is in accordance with the recommended driving operation.

3. The system of claim 2, wherein the recommended driving operation includes one of the following:
indicates a recommendation to steer from a center of a lane on which the second autonomous vehicle is operating to one side of the lane; and/or
indicates to the second autonomous vehicle to steer from a lane on which the second autonomous vehicle is operating to another lane that is adjacent to the lane.

4. The system of any preceding claim, wherein the data structure includes one or more of the following:
a type of the driving condition, a location of the driving condition, a confidence value that indicates a level of confidence that the driving condition is associated with the type, a timestamp when the driving condition is detected, and/or a unique identifier related to the driving condition; and/or
sensor data obtained by a sensor on the first autonomous vehicle, a hypothesis about the driving condition, a location of the driving condition, a timestamp when the driving condition is detected, and/or a unique identifier related to the driving condition.

5. The system of claim 4, wherein the processor of the server is further configured to implement one or more of the following:
determine one or more characteristics of the driving condition based on analysis of the sensor data;
update the data structure to include the one or more characteristics,
wherein the second data structure transmitted to the second autonomous vehicle includes the one or more characteristic;
display the sensor data on a monitor;
receive indication of one or more characteristics of the driving condition via a graphical user interface from the monitor; and
update the data structure to include the one or more characteristics,
wherein the second data structure transmitted to the second autonomous vehicle includes the one or more characteristic.

6. The system of any preceding claim, wherein the second autonomous vehicle includes a computer that includes a processor configured to:
receive the second data structure;
perform a determination that the second autonomous vehicle is at or within a first predetermined distance of the location of the driving condition; and
send, in response to the determination, instructions to one or more devices in the second autonomous vehicle, wherein the instructions cause the second autonomous vehicle to perform a driving related operation responsive to the location of the driving condition; or
delete the data structure in response to the determination that the data structure is associated with a timestamp that is more than or outside of a predetermined time window from a time when the second autonomous vehicle is expected to drive along the trajectory or when the second autonomous vehicle is operating along the trajectory.

7. The system of claim 6,
wherein the processor of the second autonomous vehicle is configured to delete the data structure in response to a determination that the data structure is associated with a timestamp that is more than or outside of a time window from a time when the second autonomous vehicle is expected to drive along the trajectory or when the second autonomous vehicle is operating along the trajectory, and
wherein the time window is based on a type of the driving condition.

8. The system of any preceding claim, wherein the driving condition includes a police vehicle, an ambulance, a fire engine, a fire truck, an emergency vehicle, a pedestrian, a bike, a construction zone, an accident area, or a traffic jam.

9. A method of sharing driving related information with an autonomous vehicle, comprising:
receiving, by a server from a first autonomous vehicle, a message comprising a first data structure that includes information about a driving condition on a road; and
transmitting, by the server to a second autonomous vehicle, a second data structure that includes information about the driving condition on the road,
wherein the second data structure is transmitted in response to determining that a location of the driving condition is related to a trajectory on which the second autonomous vehicle is operating or is expected to drive,
wherein the second data structure is transmitted to the second autonomous vehicle before the second autonomous vehicle reaches the location of the driving condition, and
wherein the server is located in a fixed location outside of the first autonomous vehicle and the second autonomous vehicle.

10. The method of claim 9, wherein the determining that the location of the driving condition is related to the trajectory includes one or more of the following:
determining that the location of the driving condition is within a second predetermined distance of the trajectory of the second autonomous vehicle; and/or
determining that the location of the driving condition is within a predetermined area that includes the trajectory of the second autonomous vehicle.

11. The method of claim 9 or 10, wherein the second data structure is the same as the first data structure.

12. The method of any of claims 9 to 11, wherein the information included in the data structure is configurable or predetermined.

13. The method of any of claims 9 to 12,
wherein the second data structure is sent with information related to the trajectory to the second autonomous vehicle, and
wherein the information related to the trajectory includes a starting address and a destination address.

14. The method of any of claims 9 to 13, wherein the message is received at a first time, and wherein the method further comprises:
receiving, by the server at a second time later than the first time, a third data structure from a third autonomous vehicle;
determining, by the server, that the third data structure includes information about the driving condition on the road or includes information about a second driving condition at a same location as the driving location; and
transmitting a fourth data structure to the second autonomous vehicle, wherein the fourth data structure includes updated information related to the driving condition or includes information about the second driving condition.

15. An apparatus for autonomous vehicle operation comprising a computer readable program storage medium having code stored thereon and a processor, the processor configured to execute the code, causing the processor to implement a method recited in one or more of claims 1 to 14.
